# EUROPÄISCHE PATENTSCHRIFT

(11) **EP 1 916 442 B1**
(45) Veröffentlichungstag und Bekanntmachung des Hinweises auf die Patenterteilung: **12.01.2011**
(21) Anmeldenummer: 07019403.0
(22) Anmeldetag: 04.10.2007
(51) Int. Cl.: F16F 15/131, F16F 15/139, F16D 67/00

(54) **Torsionsschwingungsdämpfer**
Torsion vibration damper
Amortisseur de vibrations de torsion

(30) Priorität: 26.10.2006 DE 102006050523; 14.05.2007 DE 102007022540; 14.05.2007 DE 102007022537; 18.05.2007 DE 102007023276
(43) Veröffentlichungstag der Anmeldung: 30.04.2008
(73) Patentinhaber: Schaeffler Technologies GmbH & Co. KG, 91074 Herzogenaurach (DE)
(72) Erfinder: Becht, Marco, 77815 Bühl (DE)

(56) Entgegenhaltungen:
- DE-A1- 10 223 815
- DE-A1- 19 721 236
- DE-A1- 19 847 764
- US-A- 6 119 841

## Beschreibung

Die Erfindung betrifft einen Torsionsschwingungsdämpfer mit mindestens zwei entgegen der Wirkung einer Dämpfungseinrichtung mit in Umfangsrichtung wirkenden Energiespeichern zueinander verdrehbaren Teilen, von denen das eine mit einer Antriebsmaschine und das andere mit einer anzutreibenden Welle verbindbar ist, wobei zwischen den beiden Teilen zusätzlich ein mit der Dämpfungseinrichtung in Reihe geschalteter Drehmomentbegrenzer vorgesehen ist, der zumindest in eine der zwischen den beiden Teilen möglichen Relatiwerdrehrichtungen wirksam ist und mindestens eine Schlingfederkupplung umfasst, die bei Erreichen eines vorbestimmten Verdrehwinkels zwischen den beiden Teilen ausgelöst wird, wobei sich das übertragbare Drehmoment reduziert und mindestens eine Schlingfeder umfasst.

Document US 6,119,841 A zeigt einer Torsionsschwingungsdämpfer, gemäßdem Oberbegriff des Anspruchs 1.

Aufgabe der Erfindung ist es, einen Torsionsschwingungsdämpfer gemäß dem Oberbegriff des Anspruchs 1 zu schaffen, der eine hohe Lebensdauer aufweist und/oder kostengünstig herstellbar ist.

Die Aufgabe ist bei einem Torsionsschwingungsdämpfer mit mindestens zwei entgegen der Wirkung einer Dämpfungseinrichtung mit in Umfangsrichtung wirkenden Energiespeichern zueinander verdrehbaren Teilen, von denen das eine mit einer Antriebsmaschine und das andere mit einer anzutreibenden Welle verbindbar ist, wobei zwischen den beiden Teilen zusätzlich ein mit der Dämpfungseinrichtung in Reihe geschalteter Drehmomentbegrenzer vorgesehen ist, der zumindest in eine der zwischen den beiden Teilen möglichen Relatiwerdrehrichtungen wirksam ist und mindestens eine Schlingfederkupplung umfasst, die bei Erreichen eines vorbestimmten Verdrehwinkels zwischen den beiden Teilen das übertragbare Drehmoment begrenzt und mindestens eine Schlingfeder umfasst, dadurch gelöst, dass die Schlingfeder drehfest mit mindestens einem Ringelement verbunden ist, das kraftschlüssig, insbesondere reibschlüssig, mit einem der verdrehbaren Teile verbunden ist. Durch den Kraftschluss oder Reibschluss wird ein für die Funktion der Schlingfederkupplung notwendiges Anfangsmoment erzeugt, das durch den Kraftschluss oder Reibschluss von dem Ringelement auf das zugehörige verdrehbare Teil übertragen wird, und umgekehrt. Durch die drehfeste Verbindung wird das Anfangsmoment von der Schlingfeder auf das Ringelement übertragen, und umgekehrt. In einem bekannten Stand der Technik wird die Schlingfeder unter radialer Vorspannung eingebaut, um ein Anfangsmoment durch radiale Grundreibung zu erzeugen. Durch den erfindungsgemäßen Kraftschluss oder Reibschluss zwischen dem Ringelement und dem zugehörigen verdrehbaren Teil ist es möglich, die Schlingfeder ohne Vorspannung einzubauen. Dadurch wird der Einbau der Schlingfeder erheblich vereinfacht. Darüber hinaus ist es möglich, die Ausdehnung der Schlingfeder in radialer Richtung deutlich zu reduzieren. Die Ausdehnung der Schlingfeder in radialer Richtung wird auch als radiale Höhe der Schlingfeder bezeichnet.

Ein bevorzugtes Ausführungsbeispiel des Torsionsschwingungsdämpfers ist dadurch gekennzeichnet, dass das Ringelement unter Vorspannung in das zugehörige verdrehbare Teil eingebaut ist. Vorzugsweise weist das zugehörige verdrehbare Teil eine im Wesentlichen kreiszylindermantelförmige Innenfläche auf, an der das Ringelement unter Vorspannung anliegt.

Ein weiteres bevorzugtes Ausführungsbeispiel des Torsionsschwingungsdämpfers ist dadurch gekennzeichnet, dass das Ringelement radial außen blattfederartige Segmente aufweist, die unter Vorspannung reibschlüssig an dem zugehörigen verdrehbaren Teil anliegen. Vorzugsweise sind die blattfederartigen Segmente einzeln oder in Gruppen über den Umfang des Ringelements verteilt.

Ein weiteres bevorzugtes Ausführungsbeispiel des Torsionsschwingungsdämpfers ist dadurch gekennzeichnet, dass mindestens ein Ende der Schlingfeder radial an dem Ringelement abgestützt ist. Dadurch wird die Lebensdauer der Schlingfeder erhöht und deren Funktion verbessert.

Ein weiteres bevorzugtes Ausführungsbeispiel des Torsionsschwingungsdämpfers ist dadurch gekennzeichnet, dass die Schlingfeder stoffschlüssig mit dem Ringelement verbunden ist. Die stoffschlüssige Verbindung ist vorzugsweise als Laserschweißverbindung ausgeführt.

Ein weiteres bevorzugtes Ausführungsbeispiel des Torsionsschwingungsdämpfers ist dadurch gekennzeichnet, dass die Schlingfeder formschlüssig mit dem Ringelement verbunden ist. Durch den Formschluss wird die zur Drehmomentübertragung erforderliche drehfeste Verbindung zwischen dem Ringelement und der Schlingfeder geschaffen.

Ein weiteres bevorzugtes Ausführungsbeispiel des Torsionsschwingungsdämpfers ist dadurch gekennzeichnet, dass die Schlingfeder zwei Enden aufweist, die drehfest mit jeweils einem Ringelement verbunden sind, das so in den Torsionsschwingungsdämpfer eingebaut ist, dass ein Kraftschluss oder Reibschluss zwischen dem Ringelement und dem zugehörigen verdrehbaren Teil erzeugt wird. Vorzugsweise sind die beiden Ringelemente gleich ausgeführt. Dadurch verringern sich die Herstellkosten.

Ein weiteres bevorzugtes Ausführungsbeispiel des Torsionsschwingungsdämpfers ist dadurch gekennzeichnet, dass das Ringelement einen Außenverzahnungsabschnitt aufweist, in den ein Innenverzahnungsabschnitt eingreift, der an einem zugehörigen Ende der Schlingfeder vorgesehen ist. Der Außenverzahnungsabschnitt des Ringelements ist komplementär zu dem Innenverzahnungsabschnitt der Schlingfeder ausgeführt. Dadurch wird auf einfache Art und Weise eine formschlüssige Verbindung zwischen der Schlingfeder und dem Ringelement ermöglicht.

Ein weiteres bevorzugtes Ausführungsbeispiel des Torsionsschwingungsdämpfers ist dadurch gekennzeichnet, dass das Ringelement radial außerhalb des Außenverzahnungsabschnitts einen Stützbogen aufweist, durch den das Ende der Schlingfeder mit dem Außenverzahnungsabschnitt radial abgestützt ist. Der Stützbogen erstreckt sich in Umfangsrichtung und ist vorzugsweise an einem Ende einstückig mit dem Ringelement verbunden.

Ein weiteres bevorzugtes Ausführungsbeispiel des Torsionsschwingungsdämpfers ist dadurch gekennzeichnet, dass das Ringelement Abstützbereiche für die in Umfangsrichtung wirkenden Energiespeicher und/oder Ansteuerbereiche für das Auslösen der Schlingfederkupplung aufweist. Das Ringelement kann zum Beispiel einstückig mit der Schlingfeder verbunden sein. Das Ringelement kann auch formschlüssig und/oder mit Hilfe von Befestigungselementen an der Schlingfeder befestigt sein. Das Ringelement dient dazu, Kräfte aufzunehmen und in die Schlingfeder einzuleiten. Das Ringelement kann stabiler ausgeführt werden als ansonsten zur Krafteinleitung verwendete umgebogene Enden einer herkömmlichen Schlingfeder.

Ein weiteres bevorzugtes Ausführungsbeispiel des Torsionsschwingungsdämpfers ist dadurch gekennzeichnet, dass das Ringelement Fenster für die in Umfangsrichtung wirkenden Energiespeicher aufweist. Die Fenster dienen dazu, die in Umfangsrichtung wirkenden Energiespeicher abzustützen und/oder zu führen.

Ein weiteres bevorzugtes Ausführungsbeispiel des Torsionsschwingungsdämpfers ist dadurch gekennzeichnet, dass die Schlingfeder zwei Enden aufweist, die drehfest mit jeweils einem Ringelement verbunden sind, das Abstützbereiche für die in Umfangsrichtung wirkenden Energiespeicher und/oder Ansteuerbereiche für die Reduzierung des Schlingfederkupplungsmomentes aufweist. Die Schlingfeder ist vorzugsweise in axialer Richtung zwischen zwei Ringelementen angeordnet.

Ein weiteres bevorzugtes Ausführungsbeispiel des Torsionsschwingungsdämpfers ist dadurch gekennzeichnet, dass das Ringelement mindestens einen geschlossenen Ringkörper aufweist. Vorzugsweise hat der Ringkörper einen rechteckigen Querschnitt. Alternativ kann das Ringelement aber auch geschlitzt ausgeführt sein.

Ein weiteres bevorzugtes Ausführungsbeispiel des Torsionsschwingungsdämpfers ist dadurch gekennzeichnet, dass das Ringelement zwei insbesondere geschlossene Ringkörper aufweist, zwischen denen sich mindestens zwei radiale Zungen erstrecken, die Abstützbereiche für die in Umfangsrichtung wirkenden Energiespeicher und/oder Ansteuerbereiche für die die Reduzierung des Schlingfederkupplungsmomentes aufweisen. Die Zungen können deutlich stabiler ausgeführt werden als umgebogene Enden einer herkömmlichen Schlingfeder.

Die Schlingfeder kann als Freilaufelement eingesetzt werden. Dabei nutzt man ihre selbstverstärkende (sperrende) Wirkung in die eine Richtung und die Aufhebung dieser Funktion in die andere Richtung (wobei die Feder nur gegen ihre Grundreibung verdreht werden muss).

In der hier vorliegenden Anwendung wird die Schlingfeder als Kupplung verwendet. Dabei wird die Schlingfeder (über die Bogenfedern und die Vorspann- / Löseringe) in sperrende Richtung mit Drehmoment beaufschlagt. Nach Überschreiten eines definierten Freiwinkels wird das lösende Ende der Schlingfeder (welches die zur Übertragung des Drehmomentes nötige Anfangsreibung erzeugt) vom Flansch mitgenommen. Dadurch wird das übertragbare Drehmoment der - in diesem Sinne als Kupplung wirkenden - Schlingfeder begrenzt.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Es zeigen:
- Figur 1: einen erfindungsgemäßen Torsionsschwingungsdämpfer in der Draufsicht;
- Figur 2: die Ansicht eines Schnitts entlang der Linie II-II in Figur 1;
- Figur 3: die Ansicht eines Schnitts entlang der Linie III-III in Figur 1;
- Figur 4: den Torsionsschwingungsdämpfer aus Figur 1 in der Untersicht ohne Primärschwungrad und
- Figur 5: eine perspektivische Darstellung des Torsionsschwingungsdämpfers aus Figur 4.

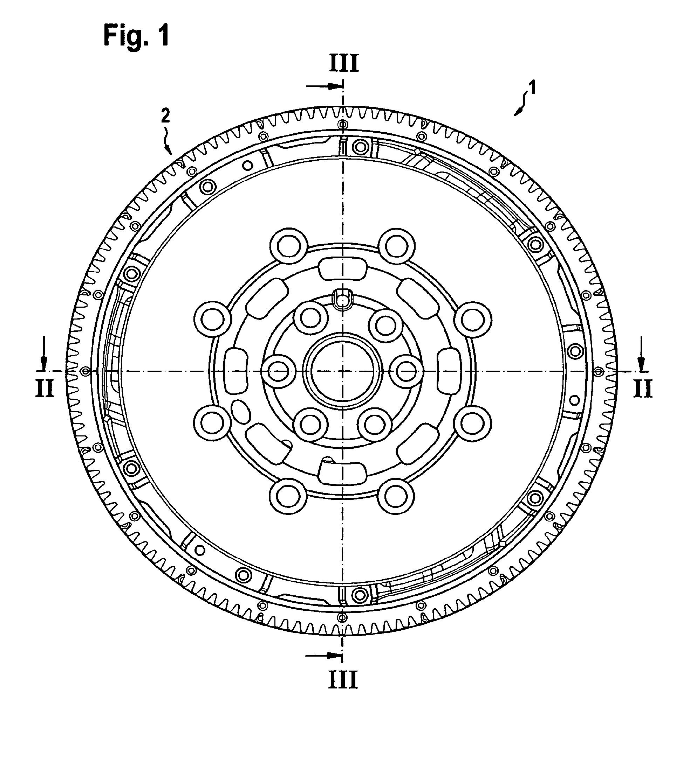

In den Figuren 1 bis 5 ist ein Torsionsschwingungsdämpfer 1, der als Zweimassenschwungrad 2 ausgeführt ist, in verschiedenen Ansichten dargestellt. Zweimassenschwungräder sind beispielsweise durch die deutschen Offenlegungsschriften DE 198 34 728 A1 und DE 41 17 584 A1 bekannt.

Das Zweimassenschwungrad 2 umfasst ein mit der Abtriebswelle eines Motors, wie der Kurbelwelle einer Brennkraftmaschine, verbindbares Primärschwungrad 3 und ein gegenüber diesem über eine Lagerung 4 zur Drehachse 5 konzentrisch gelagertes Sekundärschwungrad 6. Das Sekundärschwungrad 6 kann eine Reibungskupplung aufnehmen. Zwischen der Druckplatte einer derartigen Reibungskupplung und der ein Bestandteil des Sekundärschwungrads 6 bildenden Gegendruckplatte können Reibbeläge einer Kupplungsscheibe eingespannt werden, wobei die Kupplungsscheibe mit einer Getriebeeingangswelle drehfest verbunden werden kann.

Zwischen dem Primärschwungrad 3 und dem Sekundärschwungrad 6 ist eine Dämpfungseinrichtung 8, die wenigstens einen drehelastischen Dämpfer 9 umfasst, vorgesehen. Der drehelastische Dämpfer 9 umfasst bei dem dargestellten Ausführungsbeispiel wenigstens zwei bogenartig ausgebildete Energiespeicher 10, 11, die jeweils aus mindestens einer Schraubendruckfeder aus Stahl bestehen können. Zur Bildung eines Energiespeichers 10, 11 können aber auch mehrere Schraubendruckfedern in Reihe hintereinander angeordnet werden, die entweder unmittelbar über Endwindungen sich aneinander abstützen oder aber unter Zwischenlegung von keilförmigen Zwischenelementen hintereinander geschaltet sind. Die einzelnen Federn können dabei, wie bereits erwähnt, bogenförmig ausgebildet sein oder aber auch bei einer entsprechend großen Anzahl von Federn jeweils eine im Wesentlichen gerade Gestalt besitzen. Solche Energiespeicher sind beispielsweise durch den bereits erwähnten Stand der Technik bekannt worden.

Die Dämpfungseinrichtung 8 beziehungsweise der drehelastische Dämpfer 9 ist in Reihe geschaltet mit einer Drehmomentbegrenzungseinrichtung 12, die hier als Schlingfederkupplung 14 ausgeführt ist. Die Schlingfederkupplung 14 umfasst wenigstens eine Schlingfeder 15, die wenigstens eine, vorzugsweise wie dargestellt mehrere, axial hintereinander angeordnete Windungen 16 aufweist.

Bei dem in den Figuren 1 bis 5 dargestellten Ausführungsbeispiel besitzt die Schlingfeder 15 eine Vielzahl von axial nebeneinander angeordneten und einstückig verbundenen Windungen 16. Der Begriff axial bezieht sich im Rahmen der vorliegenden Erfindung auf die Drehachse 5. Die Schlingfeder 15 kann durch Wickeln eines vorzugsweise im Querschnitt rechteckigen Drahtes beziehungsweise Flachbandes hergestellt werden. In vorteilhafter Weise kann jedoch eine derartige Schlingfeder 15 auch aus einem hülsenförmigen Körper hergestellt werden, der in einzelne Windungen aufgeteilt wird, zum Beispiel mittels eines Aufspalt- beziehungsweise Auftrennwerkzeugs (Laserschneiden).

Durch entsprechende Kraftbeaufschlagung der Windungen 16 in Umfangsrichtung können diese tendenzmäßig im Sinne einer Durchmesservergrößerung oder Durchmesserverkleinerung verformt werden. Bei dem dargestellten Ausführungsbeispiel werden die Windungen 16 von einem ringförmigen beziehungsweise hülsenförmigen Bereich 17 umgriffen, der hier vom Primärschwungrad 3 getragen ist. Bei dem dargestellten Ausführungsbeispiel ist der hülsenförmige Bereich 17 mit einer Wandung 18 einstückig ausgebildet, die radial innen einen ringförmigen Ansatz 19 trägt, der zur Lagerung des Sekundärschwungrads 6 dient.

Am axialen Ende des ringförmigen Bereichs 17 ist eine radial nach innen weisende Wandung 20 befestigt, die zusammen mit der Wandung 18 und dem hülsenförmigen Bereich 17 eine ringartige Kammer 21 begrenzt, in der die Schlingfederkupplung 14 und der drehelastische Dämpfer 9 aufgenommen sind. In vorteilhafter Weise kann in der Kammer 21 eine vorbestimmte Menge an viskosem Medium, wie zum Beispiel Fett oder Öl, vorgesehen sein.

Bei dem dargestellten Ausführungsbeispiel ist im Drehmomentfluss vom Antriebsmotor zu einem Getriebe betrachtet die Drehmomentbegrenzungseinrichtung 12 der Dämpfungseinrichtung 8 vorgeschaltet. Durch entsprechende kinematische Umkehrung kann die Drehmomentbegrenzungseinrichtung 12 der Dämpfungseinrichtung 8 jedoch auch nachgeschaltet werden.

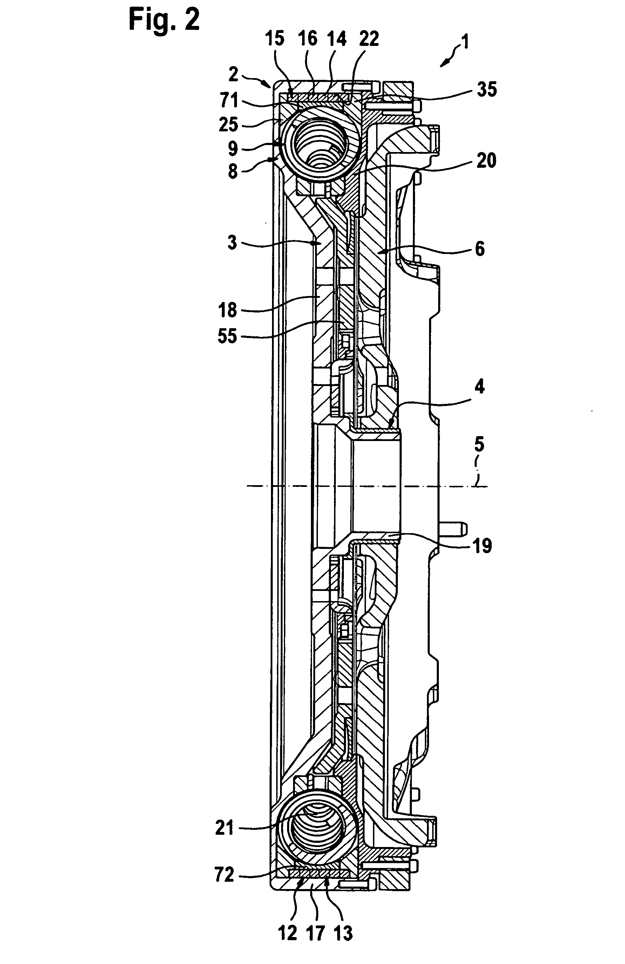

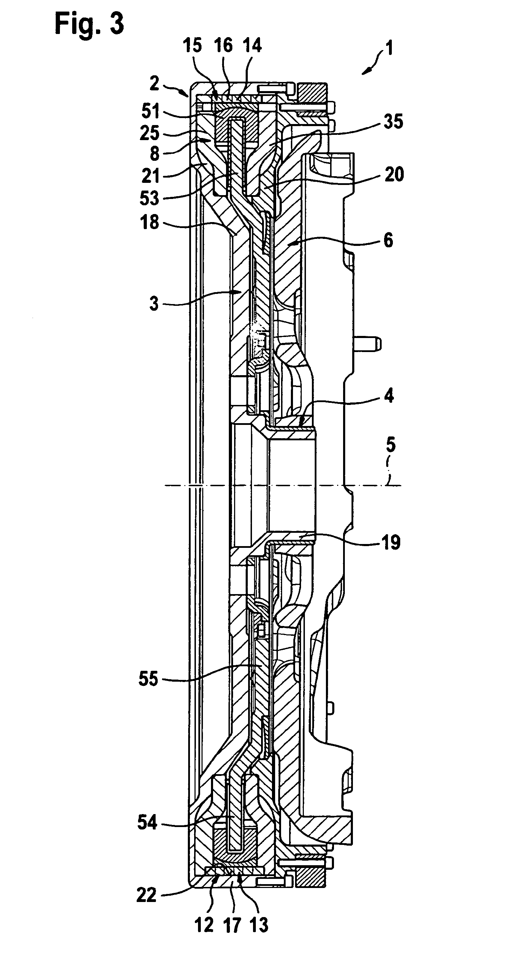

Aus den Figuren 2 und 3 ist erkennbar, dass bei einer Beaufschlagung der Windungen 16 im Sinne einer Durchmesservergrößerung diese sich radial an der Innenfläche 22 des ringförmigen Bereichs 17 abstützen. Die Abstützkraft ist dabei umso größer, je größer die in Umfangsrichtung auf die Windungen 16 einwirkende Kraft ist, welche die vorerwähnte Durchmesservergrößerung bewirkt. Aufgrund der zwischen den Windungen 16 und der Abstützfläche 22 vorhandenen Reibung kann das vom Antriebsmotor abgegebene Drehmoment übertragen werden.

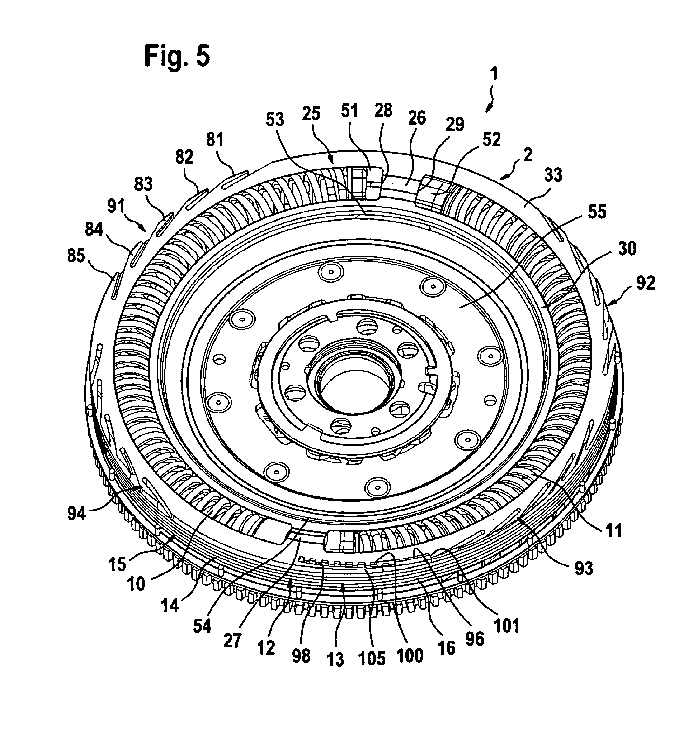

Die Verriegelung beziehungsweise Sperrung der als Freilaufeinrichtung 13 ausgebildeten Drehmomentbegrenzungseinrichtung 12 erfolgt mittels der Energiespeicher 10. Zur Krafteinleitung in die Schlingfederkupplung 14 ist, wie man in den Figuren 5 und 6 sieht, gemäß einem wesentlichen Aspekt der Erfindung ein Ringelement 25 drehfest mit der Schlingfeder 15 verbunden. Das Ringelement 25 hat im Wesentlichen die Gestalt einer Kreisringscheibe mit einem Außenring 33, von dem sich zwei Zungen 26, 27 radial nach innen erstrecken. Die beiden Zungen 26 und 27 sind um 180 Grad versetzt zueinander angeordnet, so das sie diametral gegenüberliegen. An den Zungen 26, 27 sind Abstütz- beziehungsweise Beaufschlagungsbereiche 28, 29 für die als Schraubendruckfedern ausgebildeten Energiespeicher 10, 11 vorgesehen. Radial innerhalb der Beaufschlagungsbereiche 28, 29 gehen die Zungen 26, 27 in einen Innenring 30 über, der durch die Zungen 26, 27 einstückig mit dem Außenring 33 verbunden ist. Die Zungen 26, 27 begrenzen zwischen dem Innenring 30 und dem Außenring 33 Fenster 31, 32 für die Energiespeicher 10, 11.

In den Figuren 2 und 3 sieht man, dass die Schlingfeder 15 in axialer Richtung zwischen dem Ringelement 25 und einem weiteren Ringelement 35 angeordnet ist. Von dem Ringelement 35 erstrecken sich, wie bei dem Ringelement 25 zwei Zungen radial nach innen. Die einzelnen Zungen der Ringelemente 35, 25 überdecken sich in der Draufsicht.

Zur Abstützung beziehungsweise Beaufschlagung der Energiespeicher 10 und 11 sind am Sekundärschwungrad 6 Abstützt- beziehungsweise Beaufschlagungsbereiche vorgesehen. Diese Abstütz- beziehungsweise Beaufschlagungsbereiche sind an Auslegern 53, 54 vorgesehen, die sich von einem flanschartigen Bauteil 55 radial nach außen erstrecken. Das flanschartige Bauteil 55 ist drehfest mit dem Sekundärschwungrad 6 verbunden oder Teil von diesem. Bezüglich der Verbindung zwischen dem flanschartigen Bauteil 55 und dem Sekundärschwungrad 6 wird beispielsweise auf die deutsche Offenlegungsschrift DE 103 59 635 A1 verwiesen. Falls erforderlich, kann jedoch zwischen dem flanschartigen Bauteil 55 und dem Sekundärschwungrad 6 eine weitere Dämpfungseinrichtung und/oder Drehmomentbegrenzungseinrichtung vorgesehen werden.

Die Tangentialkraft der Energiespeicher 10, 11, die auch als Bogenfedern bezeichnet werden, stützt sich über Stützschuhe 51, 52 an dem Ausleger 53 ab. An den Stützschuhen 51, 52 kommen die Beaufschlagungsbereiche 28, 29 der Zungen 27 zur Anlage. Dadurch wird erreicht, dass sich die Tangentialkraft der Energiespeicher 10, 11 über die Stützschuhe 51, 52 an dem Ringelement 25 abstützt. Das maximal übertragbare Drehmoment wird durch Löseausleger begrenzt, die sich von dem flanschartigen Bauteil 55 radial nach außen erstrecken.

Fliehkräfte der Bogenfedern 10, 11 werden über in Umfangsrichtung geteilte Schalen 71, 72 direkt an der Schlingfeder 15 abgestützt. Die Ringelemente 25, 35 wirken in Abhängigkeit von der Verdrehrichtung beziehungsweise der Krafteinleitung als Lösering oder als Sperrring. Bei einer Schub-Zug-Umkehr kehrt sich die Funktion der Ringe um, der Sperrring wird zum Lösering und der Lösering zum Sperrring.

Das Prinzip der Schlingfederkupplung 14 beruht auf einer durch den Umschlingungseffekt erzeugten Verstärkung einer Grundreibung. Die Grundreibung wird bei Schlingfederfreiläufen bzw. -kupplungen herkömmlicher Bauart durch die Schlingfeder selbst erzeugt. Zu diesem Zweck weist die Schlingfeder zum Beispiel bezüglich einer Welle ein radiales Untermaß und bezüglich eines Topfes ein radiales Übermaß auf. Wenn die Schlingfeder nun auf die Welle oder in den Topf verbaut wird, kommt es durch die radiale Aufweitung beziehungsweise radiale Kompression der Schlingfeder zu radialen Reaktionskräften. Diese Reaktionskräfte erzeugen an der Reibstelle zwischen der Schlingfeder und der Welle beziehungsweise dem Topf ein Anfangsmoment.

Wenn mit einer Schlingfederkupplung bzw. mit einem Schlingfederfreilauf mit relativ wenigen Windungen viel Drehmoment übertragen werden soll, dann ist eine relativ hohe Vorspannung nötig. Dieses geht einher mit der Forderung nach einer Schlingfeder mit einer relativ großen Ausdehnung in radialer Richtung. Die Ausdehnung in radialer Richtung wird auch als Höhe bezeichnet. Im Rahmen der vorliegenden Erfindung wird die Schlingfederkupplung als Überlastkupplung in einem als Zweimassenschwungrad ausgeführten Torsionsschwingungsdämpfer eingesetzt. Die große radiale Höhe der Schlingfeder ist im konkreten Anwendungsfall als Überlastkupplung in einen Torsionsschwingungsdämpfer konträr zu den Anforderungen hinsichtlich Bauraum, Gewicht und Kosten.

Ein weiteres Problem bei der Anwendung der Schlingfederkupplung stellt die Verformung der Schlingfeder im Lösefall dar. Insbesondere für den Fall, dass die Schlingfeder in einem rotierenden Topf angeordnet ist, müssen zum Lösen so viele Windungen von der Topfwand abgehoben werden, bis die Verstärkung durch die verbleibenden wirksamen Windungen und die Wandreibung der Schlingfeder nicht mehr ausreichen, um das Drehmoment zu übertragen. Dann rutscht die Schlingfeder im Topf.

Im konkreten Anwendungsfall ist es vorteilhaft, wenn das Löseende der Schlingfeder bis zum Lösen nur einen kurzen tangentialen Weg zurücklegt, um die Streuung des Lösemoments für unterschiedliche Reibwerte zwischen der Schlingfeder und dem Topf bei einem gegebenen Löseweg zu reduzieren. Hierzu ist es vorteilhaft, die Schlingfeder radial zu führen.

Gemäß einem wesentlichen Aspekt der Erfindung ist vorgesehen, dass die Ringelemente 25, 35 durch Reibschluss mit dem Primärschwungrad 3 das für die Funktion des Schlingfederfreilaufs notwendige Anfangsmoment erzeugen. Daher werden die Ringelemente 25, 35 auch als Reibringe bezeichnet. Durch die erfindungsgemäßen Reibringe ist es möglich, die radiale Höhe der Schlingfeder 15, die auch als Schlingfeder bezeichnet wird, deutlich zu reduzieren, da die auslegungskritischen Parameter in diesem Fall die eigene Gestaltfestigkeit beziehungsweise die Festigkeit des Übergangs zwischen Schlingfeder 15 und Ringelement 25, 35 sind.

Im Rahmen der vorliegenden Erfindung hat es sich als vorteilhaft erwiesen, die Reibringe 25, 35 so zu gestalten, dass das Anfangsmoment in Abhängigkeit der radialen Toleranzen zwischen den Reibringen 25, 35 und der Innenfläche 22, die auch als Topfinnenfläche bezeichnet wird, möglichst einen konstanten Wert annimmt. Dieser Wert ist jedoch noch vom Reibwert der Paarung Schlingfeder 15 / Topfinnenfläche 22 und dessen Streuung abhängig.

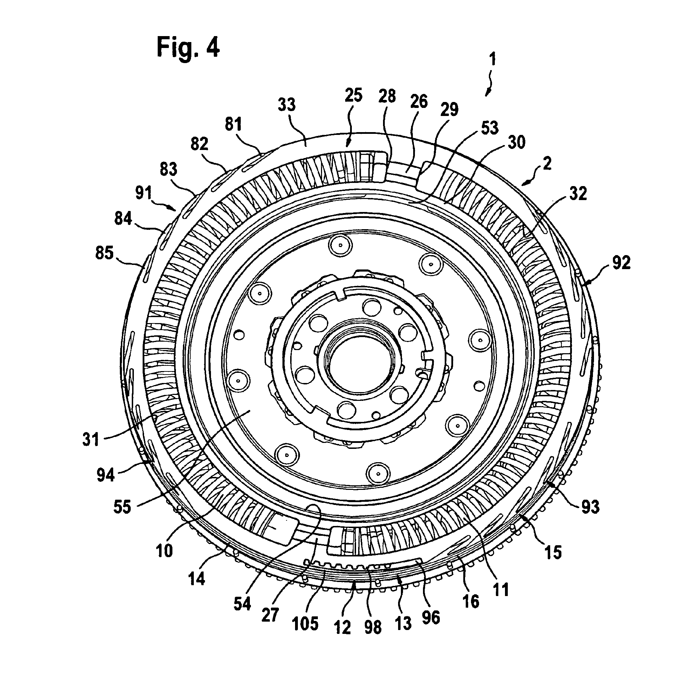

In den Figuren 4 und 5 sieht man, dass an dem Außenring 33 des Reibrings 25 radial außen fünf blattfederartige Segmente 81 bis 85 ausgebildet sind. Die blattfederartigen Segmente 81 bis 85 bilden Federfinger, die im eingebauten Zustand unter Vorspannung an der Innenfläche 22 des Primärschwungrads 3 anliegen. In den Figuren 4 und 5 sind die Federfinger 81 bis 85 im eingebauten Zustand dargestellt, obwohl das Primärschwungrad 3 nicht dargestellt ist. Im nicht eingebauten Zustand sind die Federfinger 81 bis 85 nach außen abgespreizt. Durch den Einbau in den Topf beziehungsweise den hülsenförmigen Bereich 17 des Primärschwungrads 3 werden die Federfinger oder blattfederartigen Segmente 81 bis 85 radial nach innen gezwungen. Durch die dabei entstehenden Reaktionskräfte stellt sich das Anfangsmoment ein.

Die fünf Federfinger 81 bis 85 bilden zusammen eine Gruppe 91. An dem Außenring 33 des Ringelements 25 sind insgesamt vier Gruppen 91 bis 94 mit jeweils fünf Federfingern gleichmäßig über den Umfang des Reibrings 25 verteilt. Der Reibring 35 ist genauso ausgeführt wie der Reibring 25.

Zwischen den Federfingergruppen 93 und 94 weist der Außenring 33 des Reibelements 25 eine Ausnehmung 96 mit einem Außenverzahnungsabschnitt 98 auf. In den Außenverzahnungsabschnitt 98 greift ein Innenverzahnungsabschnitt 100 ein, der an einem Ende 101 der Schlingfeder 15 ausgebildet ist. Durch die ineinander greifenden Verzahnungsabschnitte 98 und 100 ist die Schlingfeder 15 an ihrem Ende 101 formschlüssig mit dem Reibring 25 verbunden. Das andere Ende der Schlingfeder 15 ist in gleicher Weise formschlüssig mit dem Reibring 35 verbunden.

Gemäß einem weiteren Aspekt der Erfindung stützt sich das Ende 101 der Schlingfeder 15 in radialer Richtung an einem Stützbogen 105 ab, der sich radial außerhalb der beiden Verzahnungsabschnitte 98, 100 erstreckt. Der Stützbogen 105 ist an einem Ende einstückig mit dem Außenring 33 des Reibrings 25 verbunden und übernimmt im Lösefall die radiale Abstützung der Schlingfeder 15. Dadurch wird sichergestellt, dass der Reibring 25 auf der zu lösenden Seite und das zugehörige Löseende tangential denselben Wege zurücklegen. Dadurch kann eine unerwünschte tangentiale Relativbewegung zwischen der Abstützstelle und der Schlingfeder vermieden werden.

### Bezugszeichenliste

- 1.: Torsionsschwingungsdämpfer
- 2.: Zweimassenschwungrad
- 3.: Primärschwungrad
- 4.: Lagerung
- 5.: Drehachse
- 6.: Sekundärschwungrad
- 8.: Dämpfungseinrichtung
- 9.: Dämpfer
- 10.: Energiespeicher
- 11.: Energiespeicher
- 12.: Drehmomentbegrenzungseinrichtung
- 13.: Freilaufeinrichtung
- 14.: Schlingfederkupplung
- 15.: Schlingfeder
- 16.: Windungen
- 17.: hülsenförmiger Bereich
- 18.: Wandung
- 19.: ringförmiger Ansatz
- 20.: Wandung
- 21.: Kammer
- 22.: Innenfläche
- 25.: Ringelement
- 26.: Zunge
- 27.: Zunge
- 28.: Beaufschlagungsbereich
- 29.: Beaufschlagungsbereich
- 30.: Innenring
- 31.: Fenster
- 32.: Fenster
- 33.: Außenring
- 35.: Ringelement
- 51.: Stützschuh
- 52.: Stützschuh
- 53.: Ausleger
- 54.: Ausleger
- 55.: flanschartiges Bauteil
- 71.: geteilte Schale
- 72.: geteilte Schale
- 81.: blattfederartiges Segment
- 82.: blattfederartiges Segment
- 83.: blattfederartiges Segment
- 84.: blattfederartiges Segment
- 85.: blattfederartiges Segment
- 91.: Gruppe
- 92.: Gruppe
- 93.: Gruppe
- 94.: Gruppe
- 96.: Ausnehmung
- 98.: Außenverzahnungsabschnitt
- 100.: Innenverzahnungsabschnitt
- 101.: Ende
- 105.: Stützbogen

## Patentansprüche

1. Torsionsschwingungsdämpfer mit mindestens zwei entgegen der Wirkung einer Dämpfungseinrichtung (8) mit in Umfangsrichtung wirkenden Energiespeichern (10,11) zueinander verdrehbaren Teilen (3,6), von denen das eine mit einer Antriebsmaschine und das andere mit einer anzutreibenden Welle verbindbar ist, wobei zwischen den beiden Teilen (3,6) zusätzlich ein mit der Dämpfungseinrichtung (8) in Reihe geschalteter Drehmomentbegrenzer (12) vorgesehen ist, der zumindest in eine der zwischen den beiden Teilen (3,6) möglichen Relativverdrehrichtungen wirksam ist und mindestens eine Schlingfederkupplung (14) umfasst, die bei Erreichen eines vorbestimmten Verdrehwinkels zwischen den beiden Teilen (3,6) das übertragbare Drehmoment begrenzt und mindestens eine Schlingfeder umfasst, **dadurch gekennzeichnet, dass** die Schlingfeder (15) drehfest mit mindestens einem Ringelement (25,35) verbunden ist, das kraftschlüssig, insbesondere reibschlüssig, mit einem der verdrehbaren Teile (3,6) verbunden ist.

2. Torsionsschwingungsdämpfer nach Anspruch 1, **dadurch gekennzeichnet, dass** das Ringelement (25,35) unter Vorspannung in das zugehörige verdrehbare Teil (3) eingebaut ist.

3. Torsionsschwingungsdämpfer nach einem der vorhergehenden Ansprüche, **dadurch gekennzeichnet, dass** das Ringelement (25,35) radial außen blattfederartige Segmente (81-85) aufweist, die unter Vorspannung reibschlüssig oder kraftschlüssig an dem zugehörigen verdrehbaren Teil (3) anliegen.

4. Torsionsschwingungsdämpfer nach einem der vorhergehenden Ansprüche, **dadurch gekennzeichnet, dass** mindestens ein Ende (101) der Schlingfeder (15) radial an dem Ringelement (25) abgestützt ist.

5. Torsionsschwingungsdämpfer nach einem der vorhergehenden Ansprüche, **dadurch gekennzeichnet, dass** die Schlingfeder (15) stoffschlüssig mit dem Ringelement (35) verbunden ist.

6. Torsionsschwingungsdämpfer nach einem der vorhergehenden Ansprüche, **dadurch gekennzeichnet, dass** die Schlingfeder (15) formschlüssig mit dem Ringelement (25) verbunden ist.

7. Torsionsschwingungsdämpfer nach einem der vorhergehenden Ansprüche, **dadurch gekennzeichnet, dass** die Schlingfeder (15) zwei Enden (101) aufweist, die drehfest mit jeweils einem Ringelement (25) verbunden sind, das so in den Torsionsschwingungsdämpfer (1) eingebaut ist, dass ein Kraftschluss oder Reibschluss zwischen dem Ringelement (25) und dem zugehörigen verdrehbaren Teil (3) erzeugt wird.

8. Torsionsschwingungsdämpfer nach einem der vorhergehenden Ansprüche, **dadurch gekennzeichnet, dass** das Ringelement (25,35) einen Außenverzahnungsabschnitt (98) aufweist, in den ein Innenverzahnungsabschnitt (100) eingreift, der an einem zugehörigen Ende (101) der Schlingfeder (15) vorgesehen ist.

9. Torsionsschwingungsdämpfer nach Anspruch 8, **dadurch gekennzeichnet, dass** das Ringelement (25) radial außerhalb des Außenverzahnungsabschnitts (98) einen Stützbogen (105) aufweist, durch den das Ende (101) der Schlingfeder (15) mit dem Außenverzahnungsabschnitt (98) radial abgestützt ist.

10. Torsionsschwingungsdämpfer nach einem der vorhergehenden Ansprüche, **dadurch gekennzeichnet, dass** das Ringelement (25) Abstützbereiche (28,29) für die in Umfangsrichtung wirkenden Energiespeicher (10,11) und/oder Ansteuerbereiche für die Auslösung der Schlingfederkupplung aufweist.

11. Torsionsschwingungsdämpfer nach einem der vorhergehenden Ansprüche, **dadurch gekennzeichnet, dass** das Ringelement (25) Fenster (31,32) für die in Umfangsrichtung wirkenden Energiespeicher (10,11) aufweist.

12. Torsionsschwingungsdämpfer nach Anspruch 11, **dadurch gekennzeichnet, dass** die Schlingfeder (15) zwei Enden (101) aufweist, die drehfest mit jeweils einem Ringelement (25,35) verbunden sind, das Abstützbereiche (28,29) für die in Umfangsrichtung wirkenden Energiespeicher und/oder Ansteuerbereiche für die die Auslösung der Schlingfederkupplung aufweist.

13. Torsionsschwingungsdämpfer nach einem der vorhergehenden Ansprüche, **dadurch gekennzeichnet, dass** das Ringelement (25,35) mindestens einen geschlossenen Ringkörper (30,33) aufweist.

14. Torsionsschwingungsdämpfer nach einem der vorhergehenden Ansprüche, **dadurch gekennzeichnet, dass** das Ringelement (25,35) zwei insbesondere geschlossene Ringkörper (30,33) aufweist, zwischen denen sich mindestens zwei radiale Zungen (26,27) erstrecken, die Abstützbereiche (28,29) für die in Umfangsrichtung wirkenden Energiespeicher und/oder Ansteuerbereiche für die Auslösung der Schlingfederkupplung aufweisen.

## Claims

1. Torsional vibration damper having at least two parts (3, 6) which can be rotated with respect to one another counter to the action of a damping device (8) with energy accumulators (10, 11) which act in the circumferential direction, of which parts (3, 6) one can be connected to a drive machine and the other can be connected to a shaft to be driven, a torque limiter (12) which is connected in series with the damping device (8) being additionally provided between the two parts (3, 6), which torque limiter (12) is active at least in one of the relative rotational directions possible between the two parts (3, 6) and comprises at least one wrap-spring coupling (14) which, when a predefined rotational angle has been reached between the two parts (3, 6), limits the torque which can be transmitted and comprises at least one wrap spring, **characterized in that** the wrap spring (15) is connected fixedly in terms of rotation to at least one annular element (25, 35) which is connected to one of the rotatable parts (3, 6) in a non-positive, in particular frictionally locking, manner.

2. Torsional vibration damper according to Claim 1, **characterized in that** the annular element (25, 35) is installed with prestress into the associated rotatable part (3).

3. Torsional vibration damper according to one of the preceding claims, **characterized in that** the annular element (25, 35) has radially outer leaf spring-like segments (81-85) which bear with prestress against the associated rotatable part (3) in a frictionally locking or non-positive manner.

4. Torsional vibration damper according to one of the preceding claims, **characterized in that** at least one end (101) of the wrap spring (15) is supported radially on the annular element (25).

5. Torsional vibration damper according to one of the preceding claims, **characterized in that** the wrap spring (15) is connected to the annular element (35) with a material-to-material fit.

6. Torsional vibration damper according to one of the preceding claims, **characterized in that** the wrap spring (15) is connected to the annular element (25) in a positively locking manner.

7. Torsional vibration damper according to one of the preceding claims, **characterized in that** the wrap spring (15) has two ends (101) which are connected fixedly in terms of rotation to in each case one annular element (25) which is installed into the torsional vibration damper (1) in such a way that a non-positive or frictional connection is produced between the annular element (25) and the associated rotatable part (3).

8. Torsional vibration damper according to one of the preceding claims, **characterized in that** the annular element (25, 35) has an external toothing segment (98), into which an internal toothing section (100) engages which is provided on an associated end (101) of the wrap spring (15).

9. Torsional vibration damper according to Claim 8, **characterized in that**, radially outside the external toothing section (98), the annular element (25) has a supporting arch (105), by which the end (101) of the wrap spring (15) with the external toothing section (98) is supported radially.

10. Torsional vibration damper according to one of the preceding claims, **characterized in that** the annular element (25) has supporting regions (28, 29) for the energy accumulators (10, 11) which act in the circumferential direction and/or actuating regions for triggering the wrap-spring coupling.

11. Torsional vibration damper according to one of the preceding claims, **characterized in that** the annular element (25) has windows (31, 32) for the energy accumulators (10, 11) which act in the circumferential direction.

12. Torsional vibration damper according to Claim 11, **characterized in that** the wrap spring (15) has two ends (101) which are connected fixedly in terms of rotation to in each case one annular element (25, 35) which has supporting regions (28, 29) for the energy accumulators which act in the circumferential direction and/or actuating regions for triggering the wrap-spring coupling.

13. Torsional vibration damper according to one of the preceding claims, **characterized in that** the annular element (25, 35) has at least one closed annular body (30, 33).

14. Torsional vibration damper according to one of the preceding claims, **characterized in that** the annular element (25, 35) has two, in particular closed, annular bodies (30, 33), between which at least two radial tongues (26, 27) extend which have supporting regions (28, 29) for the energy accumulators which act in the circumferential direction and/or actuating regions for triggering the wrap-spring coupling.

## Revendications

1. Amortisseur de vibrations de torsion comprenant au moins deux parties (3, 6) pouvant tourner l'une par rapport à l'autre à l'encontre de l'effet d'un dispositif d'amortissement (8) avec des accumulateurs d'énergie (10, 11) agissant dans la direction périphérique, dont l'une peut être connectée à un moteur d'entraînement et l'autre à un arbre à entraîner, un limiteur de couple (12) monté en série avec le dispositif d'amortissement (8) étant en outre prévu entre les deux parties (3, 6), lequel agit au moins dans une des directions de rotation relative possibles entre les deux parties (3, 6) et comprend au moins un accouplement à ressort hélicoïdal (14), qui limite le couple transmissible lorsqu'un angle de rotation prédéterminé est atteint entre les deux parties (3, 6) et qui comprend au moins un ressort hélicoïdal, **caractérisé en ce que** le ressort hélicoïdal (15) est connecté de manière solidaire en rotation à au moins un élément annulaire (25, 35), qui est connecté par engagement par force, notamment par engagement par friction, à l'une des parties rotatives (3, 6).

2. Amortisseur de vibrations de torsion selon la revendication 1, **caractérisé en ce que** l'élément annulaire (25, 35) est incorporé par précontrainte dans la partie rotative associée (3).

3. Amortisseur de vibrations de torsion selon l'une quelconque des revendications précédentes, **caractérisé en ce que** l'élément annulaire (25, 35) présente radialement à l'extérieur des segments de type ressort à lame (81-85) qui s'appliquent par précontrainte par engagement par friction ou par engagement par force contre la partie rotative associée (3).

4. Amortisseur de vibrations de torsion selon l'une quelconque des revendications précédentes, **caractérisé en ce qu'**au moins une extrémité (101) du ressort hélicoïdal (15) est supportée radialement sur l'élément annulaire (25).

5. Amortisseur de vibrations de torsion selon l'une quelconque des revendications précédentes, **caractérisé en ce que** le ressort hélicoïdal (15) est connecté par engagement par liaison de matière à l'élément annulaire (35).

6. Amortisseur de vibrations de torsion selon l'une quelconque des revendications précédentes, **caractérisé en ce que** le ressort hélicoïdal (15) est connecté par engagement par coopération de forme à l'élément annulaire (25).

7. Amortisseur de vibrations de torsion selon l'une quelconque des revendications précédentes, **caractérisé en ce que** le ressort hélicoïdal (15) présente deux extrémités (101) qui sont connectées de manière solidaire en rotation à chaque fois à un élément annulaire (25), qui est incorporé dans l'amortisseur de vibrations de torsion (1) de telle sorte qu'un engagement par force ou un engagement par friction soit produit entre l'élément annulaire (25) et la partie rotative associée (3).

8. Amortisseur de vibrations de torsion selon l'une quelconque des revendications précédentes, **caractérisé en ce que** l'élément annulaire (25, 35) présente une portion de denture extérieure (98) dans laquelle vient en prise une portion de denture intérieure (100), qui est prévue sur une extrémité associée (101) du ressort hélicoïdal (15).

9. Amortisseur de vibrations de torsion selon la revendication 8, **caractérisé en ce que** l'élément annulaire (25) présente radialement à l'extérieur de la portion de denture extérieure (98) un arc de support (105) qui permet de supporter radialement l'extrémité (101) du ressort hélicoïdal (15) avec la portion de denture extérieure (98).

10. Amortisseur de vibrations de torsion selon l'une quelconque des revendications précédentes, **caractérisé en ce que** l'élément annulaire (25) présente des régions de support (28, 29) pour les accumulateurs d'énergie (10, 11) agissant dans la direction périphérique, et/ou des régions de commande pour le déclenchement de l'accouplement à ressort hélicoïdal.

11. Amortisseur de vibrations de torsion selon l'une quelconque des revendications précédentes, **caractérisé en ce que** l'élément annulaire (25) présente des fenêtres (31, 32) pour les accumulateurs d'énergie (10, 11) agissant dans la direction périphérique.

12. Amortisseur de vibrations de torsion selon la revendication 11, **caractérisé en ce que** le ressort hélicoïdal (15) présente deux extrémités (101), qui sont connectées de manière solidaire en rotation à chaque fois à un élément annulaire (25, 35), qui présente des régions de support (28, 29) pour les accumulateurs d'énergie agissant dans la direction périphérique et/ou des régions de commande pour le déclenchement de l'accouplement à ressort hélicoïdal.

13. Amortisseur de vibrations de torsion selon l'une quelconque des revendications précédentes, **caractérisé en ce que** l'élément annulaire (25, 35) présente au moins un corps annulaire fermé (30, 33).

14. Amortisseur de vibrations de torsion selon l'une quelconque des revendications précédentes, **caractérisé en ce que** l'élément annulaire (25, 35) présente deux corps annulaires notamment fermés (30, 33), entre lesquels s'étendent au moins deux langues radiales (26, 27), qui présentent des régions de support (28, 29) pour les accumulateurs d'énergie agissant dans la direction périphérique et/ou des régions de commande pour le déclenchement de l'accouplement à ressort hélicoïdal.
